# EUROPEAN PATENT APPLICATION

(11) **EP 4 837 873 A1**
(43) Date of publication of application: **11.11.2026**
(21) Application number: 26163755.7
(22) Date of filing: 10.03.2026
(51) Int. Cl.: B66B 1/46, B66B 3/00, B66B 5/00

(54) **SYSTEM AND METHOD FOR MANAGING APPS UPLOADED ON AN INTERACTIVE PANEL OF A PEOPLE MOVER SYSTEM**

(30) Priority: 07.05.2025 US 202519201422
(71) Applicant: Otis Elevator Company, Farmington, Connecticut 06032 (US)
(72) Inventor: Mahmood, Hamid, Ontario, L4X 2Z5 (CA)
(74) Representative: Schmitt-Nilson Schraud Waibel Wohlfrom Patentanwälte Partnerschaft mbB

(57) **Abstract**

An elevator system, having: an elevator management system, the elevator management system including one or more system controllers; an elevator car, the elevator car having a first operating panel; wherein the first operating panel is operationally coupled to the one or more system controllers; and wherein the first operating panel includes a plurality of user engageable apps, including a first app that is configured for issuing an alert to the elevator management system during a trapped passenger event.

## Description

The embodiments relate to a distributed people mover system and more specifically to a system and method for managing apps uploaded on an interactive panel of a people mover system.

A people mover system, such as located an elevator car, may show on a panel specific information as managed by a content manager. However, a user engageable panel would enhance an experience of the passengers.

Disclosed is an elevator system, including: an elevator management system, the elevator management system including one or more system controllers; an elevator car, the elevator car having a first operating panel; wherein the first operating panel is operationally coupled to the one or more system controllers; and wherein the first operating panel includes a plurality of user engageable apps, including a first app that is configured for issuing an alert to the elevator management system during a trapped passenger event.

Particular embodiments further may include at least one, or a plurality of, the following optional features, alone or in combination with each other:

In addition to one or more aspects of the system or as an alternate, the system includes a hall station, the hall station having a second operating panel, wherein the second operating panels further includes the plurality of user engageable apps.

In addition to one or more aspects of the system or as an alternate, the first app is configured to continuously run while other ones of the user engageable apps are executed.

In addition to one or more aspects of the system or as an alternate, the plurality of apps includes one or more of: an emergency call app, for two-way voice and video; an infotainment content app, including news feeds; an advertising app; a mechanic control app, responsive to touchscreen input; a ride quality app; a digital notice board app; a directional app, directing users to selected locations; or a repairing app, to trigger repairing with connected devices.

In addition to one or more aspects of the system or as an alternate, at least one of the plurality of apps is configured for being modified by a passenger interacting directly, or via a mobile device, with one or more of the first and second operating panels, to define a passenger modified app.

In addition to one or more aspects of the system or as an alternate, a system data storage module is configured to receive and store the passenger modified app from the one or more of the first and second operating panels, and the one or more controllers is configured to distribute the passenger modified app among other operating panels that are operationally coupled with the one or more system controllers.

In addition to one or more aspects of the system or as an alternate, the system data storage module is configured to: receive and store the plurality of apps; and receive an update to one or more of the plurality of apps to define a system modified app; and the one or more system controllers is configured push the system modified app among the other operating panels that are operationally coupled with the one or more system controllers.

In addition to one or more aspects of the system or as an alternate, the system data storage module is configured to receive digital content from a third party content provider; and the one or more system controllers is configured to push the digital content to the one more of the first and second operating panels for displaying the digital content.

In addition to one or more aspects of the system or as an alternate, the digital content includes data representing an advertisement of a product or service.

In addition to one or more aspects of the system or as an alternate, the one or more of the first and second operating panels is the first operating panel in the elevator car.

In addition to one or more aspects of the system or as an alternate, the one or more of the first and second operating panels is the second operating panel in the hall station.

Disclosed is a method of operating an elevator system, including running, on a first operating panel, operationally coupled to one or more system controllers, a plurality of user engageable apps, including a first app that is configured for issuing an alert during a trapped passenger event, wherein: the first operating panel is coupled to an elevator car and configured to control operations of the elevator car .

Particular embodiments further may include at least one, or a plurality of, the following optional features, alone or in combination with each other:

In addition to one or more aspects of the method or as an alternate, the method includes running, on a second operating panel, operationally coupled to the one or more system controllers, the plurality of user engageable apps, including the first app that is configured for issuing an alert during a trapped passenger event; and the second operating panel is a hall station panel.

In addition to one or more aspects of the method or as an alternate, the method includes continuously running the first app while other ones of the user engageable apps are executed.

In addition to one or more aspects of the method or as an alternate, the plurality of apps includes one or more of: an emergency call app, for two-way voice and video; an infotainment content app, including news feeds; an advertising app; a mechanic control app, responsive to touchscreen input; a ride quality app; a digital notice board app; a directional app, directing users to selected locations; or a repairing app, to trigger repairing with connected devices.

In addition to one or more aspects of the method or as an alternate, the method includes at least one of the plurality of apps being configured for modification by a passenger interacting directly, or via a mobile phone, with one or more of the first and second operating panels, to define a passenger modified app.

In addition to one or more aspects of the method or as an alternate, the method includes receiving and storing, on a system data storage module, the passenger modified app from the one or more of the first and second operating panels; and distributing, by the one or more controllers, the passenger modified app among other operating panels that are operationally coupled with the one or more system controllers.

In addition to one or more aspects of the method or as an alternate, the method includes receiving and storing, on the system data storage module, the plurality of apps; receiving, on the system data storage module, an update to one or more of the plurality of apps to define a system modified app; and pushing, by the one or more system controllers, the system modified app among the other operating panels that are operationally coupled with the one or more system controllers.

In addition to one or more aspects of the method or as an alternate, the method includes receiving and storing, on the system data storage module, digital content from a third party content provider; and pushing to one or more of the operating panels, by the one or more system controllers, the digital content, for displaying the digital content.

In addition to one or more aspects of the method or as an alternate, the digital content includes data representing an advertisement of a product or service.

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 shows a distributed people mover system according to the embodiments that is configured to provide AI assistance to resolve technical issues for a mechanic performing maintenance on a people mover system;
FIG. 3 is a flowchart showing a method of managing a people mover according to an embodiment;
FIG. 4 shows aspects of the distributed people mover system utilized for managing apps uploaded on interactive panels for passengers utilizing the people mover system; and
FIG. 5 is another flowchart showing aspects of running the apps on the panels.

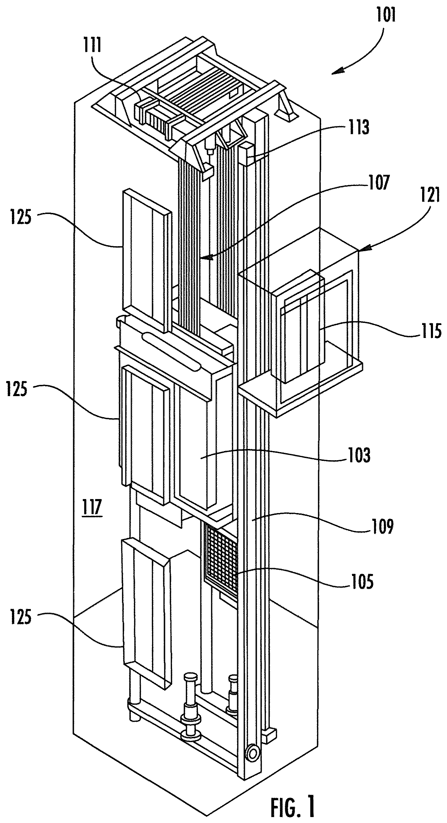

FIG. 1 is a perspective view of an elevator system 101 including an elevator car 103, a counterweight 105, a tension member 107, a guide rail (or rail system) 109, a machine (or machine system) 111, a position reference system 113, and an electronic elevator controller (controller) 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft (or hoistway) 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the hoistway or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1. In one example, embodiments disclosed herein may be applicable conveyance systems such as an elevator system 101 and a conveyance apparatus of the conveyance system such as an elevator car 103 of the elevator system 101. In another example, embodiments disclosed herein may be applicable conveyance systems such as an escalator system and a conveyance apparatus of the conveyance system such as a moving stair of the escalator system and/or a moving walkway system.

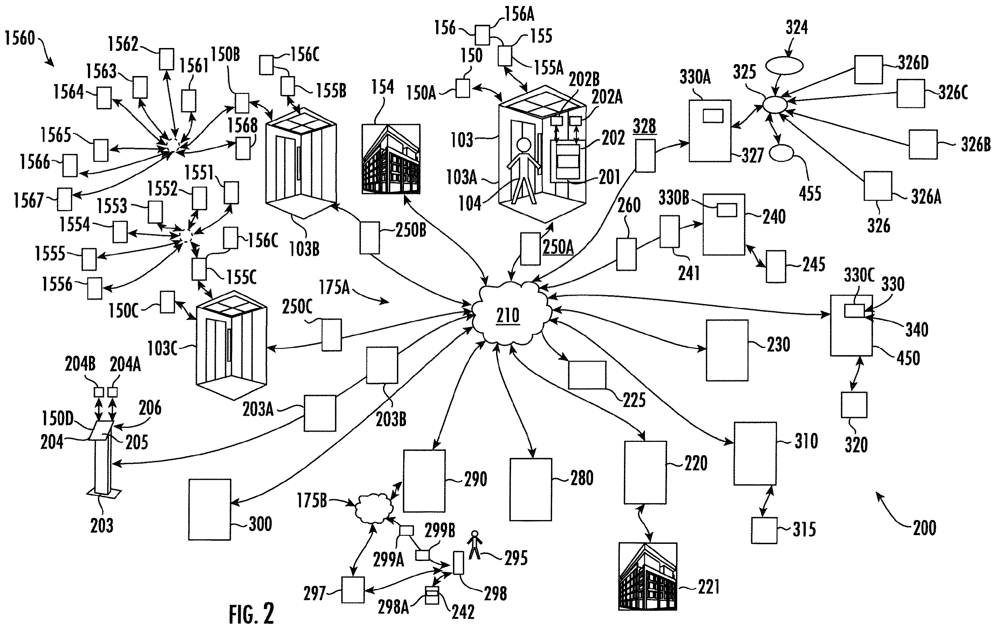

Turning to FIG. 2, disclosed is a distributed (e.g., cloud) people mover system (or system) 200. While various modules are illustrated for performing discrete functions in FIG. 2, it is to be appreciated that two or more of the functions may be combined into a common module or alternatively the functions may be further divided into additional modules, executable on one or more controllers which may be generally referenced as processors.

The system 200 includes a network 210 which may be a wide area network such as the internet. Devices 103A-103C (generally 103, which may also be referred to as people movers), which may be elevator cars, escalators, moving walkways or the like, as nonlimiting embodiments, configured to move passengers 104. The devices 103 may be IoT (internet of things) devices, i.e., devices operationally coupled over the internet over a first communication channel 175A (generally a communications channel 175). The first communication channel 175A may utilize a wired channel, such as ethernet, or a wireless channel, e.g., a wide area network or a cellular network, discussed in greater detail below.

Each of the devices 103 may have a device controller 150A-150C (generally controller 150) and a sensor 155A-155C (generally 155) configured to transmit sensor data 156A-156C (generally 156). The sensor 155 may include one or more of a speed sensor 1551, a vibration sensor 1552, a load sensor 1553, an accelerometer 1554, a door operation sensor 1555 and a health sensor 1556, e.g., that is configured to sense a mechanical failure of the device 103. The system may include additional sensors-the foregoing list should not be viewed as limiting. The controller 150 may control operational parameters 160 of the device 103, such as speed between end locations such as floors 1561, brake speed when approaching an end location 1562, acceleration from standstill when traveling away from an end location 1563, door opening speed 1564, door close speed 1565, door idle when open 1566, air conditioning conditions 1567, as non-limiting examples, which may further include a volume of an internal speaker or sensitivity of an internal microphone, etc.

Where the device 103 is an elevator car, one or more of the devices 103 may include an interactive panel 201 (e.g., a first panel) with a display 202 that may be a touchscreen utilized for controls such as identifying a destination floor, and door control features. The panel 201 may have a speaker 202A and mic 202B for a passenger 104 to communicate with support authorities such as a rescue system, which may in some embodiments include a building management system (BMS) 154, over the first communications channel 175A, e.g., during a trapped passenger event.

A hall call station (or call station) 203 may be provided, e.g., where the device 103 is an elevator car. The call station 203 may have a dedicated controller 150D to control operations of the call station 203. The hall station 202 may be configured to send outbound call station data 203A over the first communication channel 175A to request service at an elevator. The call station may receive call station inbound data 203B containing information about when an elevator car is expected to arrive in a lobby to service a call request and which elevator car in a bank of cars will service the request. The call station 203 may have an interactive panel 204 (e.g., a second panel), with a display 205 which may be a touchscreen, for making the call and displaying relevant information. The call station 203 may also have a speaker 204A and mic 204B to communicate with the BMS 154, e.g., in situations other than resolving a trapped passenger incident, or otherwise receive notifications. The first and second panels 201, 204 may be generically referred to as an interactive panel 206.

The system 200 may have a controller module (or service) 220 (otherwise referred to as a system central controller), a data storage module 225 accessible as needed by system components, an IoT central module 230 or similar platform, and an IoT application and data storage module 240 (for simplicity an application module or an IoT app module 240). Apps controlled by the IoT app module 240 may be stored on the same module or on the data storage module 225 and presented, e.g., to the mechanic 295 on the mobile device 298 (discussed below) in the form of a digital marketplace or app store 242. The IoT central module 230 is a known IoT application platform as a service (aPaaS) with user-engageable dashboards that centralizes device data, allows for data-driven workflows, and the creation of custom apps 241 that may be distributed to the BMS 154, the devices 103, the call station 203, the mobile device 298 of the mechanic 295, or otherwise. The controller module 220 may be controlled via a central control station 221 for the system 200, directly of via a communication channel 175 over the network 210.

IoT app module 240 is utilized for storage and other processes running in a cloud service. The message comes from the devices 103 (e.g., in a raw format or as processed data, as nonlimiting examples) and are extracted, transformed into a readable/storable format and loaded onto databases for the front end applications to consume and publish. The system controller module 220 instructs the IoT central module 230 to register the devices 103 with the IoT app module 240 to enable the IoT app module 240 to receive telemetry data 250A-250C (generally 250), which includes the sensor data 156, from the devices 103 and to transmit code 260, such as updates, to the devices 103. The devices 103 may also interact in other ways with each other and the cloud, e.g., to request updates, voice communications, etc. It is to be appreciated that the telemetry data 250 may include different types of data, such as logs, metrics, events, and traces. Logs capture detailed events or actions within a system, metrics track performance over time, events highlight significant occurrences, and traces map the flow of processes across different systems. Together, these pieces form a comprehensive picture of system health and performance. There may be hundreds of thousands of the devices 103, each sending production (e.g., actual) telemetry data 250 to the IoT app module 240, each message related to different aspects of the devices 103, such as the operational condition of the brakes, doors, etc., throughout the day.

The IoT app module 240 may generate logs 245, daily, indicative of received telemetry data 250 and transmitted code 260. A monitor and capture metrics module (for simplicity, a monitoring module) 280 may monitor the logs generated by the IoT app module 240. The logs 245 may be forwarded to a metrics storage module 310 where telemetry metrics data 315 is derived from the logs 245. A query module 450 may generate reports 320 from the telemetry metrics data 315, which may be viewable via an interactive performance dashboard 297, accessible via a web interface module 290, e.g., on a mobile device, i.e., a mobile phone 298 having a user engageable display 298A, as a nonlimiting embodiment. With this configuration, errors in the communications can be identified by a user 295 who may be a technician. The user may engage an API module (or gateway) 300 to engage the system controller module 220. The mobile phone 298 may communicate with, e.g., the system controller module 220, by transmitting outbound mobile device data 299A to the controller module 220, and receiving inbound mobile device data 299B from the controller module 220, over a second communication channel 175B which may be a cellular network or a wide area network.

More specifically, the figure shows the user 295 that engages the web interface module 290 to communicate with the system controller module 220 via the API module 300, and to view the performance dashboard 297, e.g., on their mobile phone 298. The IoT central module 230 is shown that registers the devices 103 with the IoT app module 240. The registration establishes trust in device connectivity and allows messages to traverse between devices and the cloud in both directions, i.e., device to cloud and cloud to device, according to predefined load scenarios. The monitoring module 280 may monitor telemetry logs 245 generated by the IoT app module 240. The query module 450 generates telemetry metrics data 315 and reports 320 from the telemetry metrics data 315, which may be stored on the metrics storage module 310 and visualized on a performance dashboard 297 over the web interface module 290 to identify errors logged over the past day (as an example) at the IoT app module 240.

A machine learning model (MLM) 325 (generally referred to as a neural network model or a generative AI model 324), may be within an AI module 327 or located in one of the identified modules, such as the query module 450 utilized to generate the reports 320. The MLM 325 may be engaged by the user 295, utilizing natural language, when requesting a report, e.g., seeking a solution to a technical operational issue related to operation of the devices 103. In response, the MLM 325 may provide recommendations on remedying issues identified in the telemetry logs 245, e.g., based on accumulated data utilized to train the MLM 325.

As can be appreciated, the MLM 325, may be in a learning mode (training mode), where it is training on datasets, such as obtained from the sensor data 156 or other data identified below. In this mode, the MLM 325 learns patterns and relationships within the data to make accurate predictions or decisions. In this mode, the parameters of the MLM 325 are adjusted based on the input data and the desired output. In a production mode (inference mode), once the MLM 325 is trained and validated, and is deployed, the MLM 325 uses the learned parameters to make predictions on new, unseen data, and provides real-time or batch predictions to end-users or other systems.

Sources of information for the learning mode of the MLM 325 may include data 326, including device maintenance data 326A, e.g., obtained from mechanics engaging apps on their phones 298 that transmit relevant data to the system controller module 220. The data 326 may include code download (e.g., update) data 326B, e.g. obtained from the IoT app module 240. The data 326 may include heartbeat data 326C from the telemetry data 250 including performance, alarms and event data. The data 326 may also include initial commissioning data 326D, e.g., obtained from the IoT central module 230 when registering the device 103.

Similarly, the AI module 327, or e.g., the query module 450, may be equipped with a large language model (LLM) 455 as another machine learning model 325 or generative AI model 324. The LLM 455 may be trained using typical techniques, e.g., collecting and processing datasets that are relevant to the operation of the devices 103, applying a model architecture such as transformers which can handle long-range dependencies in text, applying hyperparameter tuning to the training data batches to adjust the size and configuration of the training data, applying optimization techniques to improve accuracy, and thereafter iteratively tuning the LLM 455. The LLM 455 may be trained to respond to technicians 295 who submit queries, e.g., to the system controller module 220, for reports 320 about the current, historical, and predictable (e.g., statistically) future operational conditions of the system 200. That is, while the MLM 325 may be utilized to identify technical operational issues in the system 200 and recommend solutions, the LLM 455 may be utilized to enable a communication exchange with a technician 295 utilizing natural language.

It is to be appreciated that the MLM 325 may be trained to respond to natural language input without the need for a separate LLM 455, e.g., utilizing natural language processing (NLP). NPL is a subfield of machine learning focused on the interaction between computers and human language.

Where the devices 103 are elevator cars, the trained generative AI model 324 may be able to respond to queries such as "how do we fix a door motion issue for elevator car number (xxx) located at (yyyy), where the issue presents as (zzz)." It can be appreciated that, with the disclosed embodiments, technicians 295 can type their queries in the natural language into their phones 298 (or other mobile device), and the system 200 will provide an answer based on amassed data that is processed by the generative AI model 324. The system 200 enables the saving of time and effort, and provides more accurate and reliable solutions to the technicians 295.

As indicated, while various modules are illustrated for performing discrete functions in FIG. 2, it is to be appreciated that two or more of the functions may be combined into a common module or alternatively the functions may be further divided into additional modules. As such reference to the system controller module 220 herein may implicate functions described as applicable to the system controller module 220 or other modules, including one or more dedicated controllers (or processors) 330. Several separate controllers 330A, 330B, 330C are shown which are dedicated to the AI module 327, the IoT app module 240 and the query module 450 but the system can have a great or fewer number of dedicated processors 330. In addition, or as an alternative, the system controller module 220 may facilitate communication between and operations of the various modules shown in FIG. 2. General reference to controllers 340 herein includes reference to the device controllers 150 and the module controllers 330.

It is to be further appreciated that the utilization of the distributed cloud system is not intended on limiting the scope of the embodiments. That is, the mobile phone 298 of the technician 295 may be configured to perform the processes identified herein as being performed over the distributed system. This would be useful in situations where, for example, the mobile phone 298, in possession of the technician 295, is in a location where it cannot obtain a signal to communicate with the other components of the distributed system 200. Having the mobile phone 298 equipped to perform operations identified as being performed over the distributed system would also avoid latency issues associated with communication exchanges over a network.

The system 200 may be configured for providing AI assisted maintenance and control to the people mover 103. The people mover 103 may be an elevator car, a moving platform or an escalator. For example, the system 200, in addition to the people mover 103, may include the device controller 150 operationally coupled to the people mover 103. The device controller 150 is configured to transmit telemetry data 250 over the first communication channel 175A. The system controller module 220 may be configured to receive the telemetry data 250. The mobile phone 298 may be configured to transmit mobile device data 299 to the system controller module 220 over the second communication channel 175B.

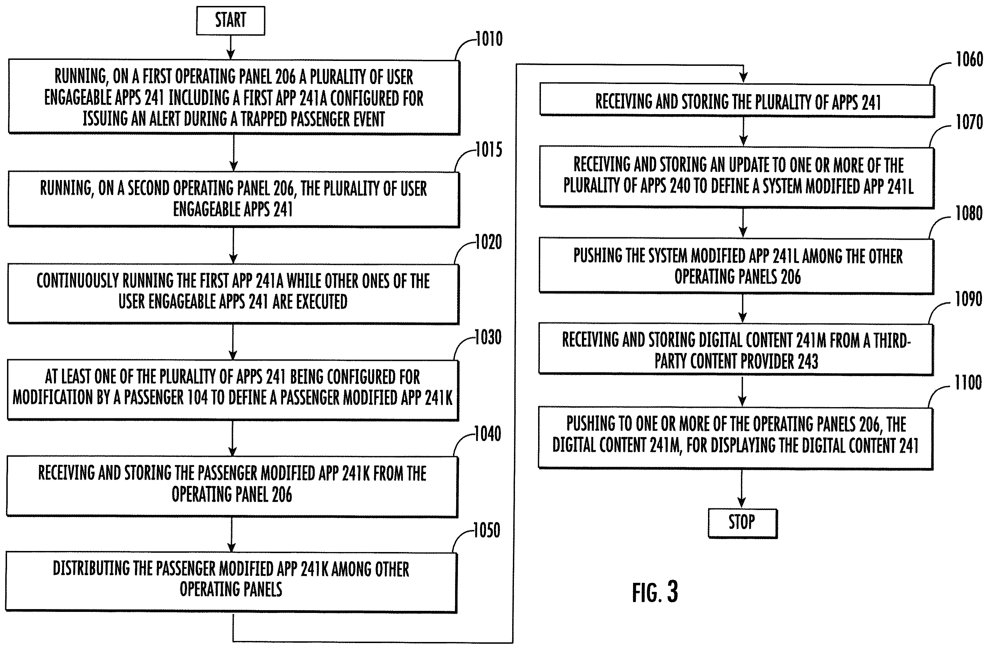

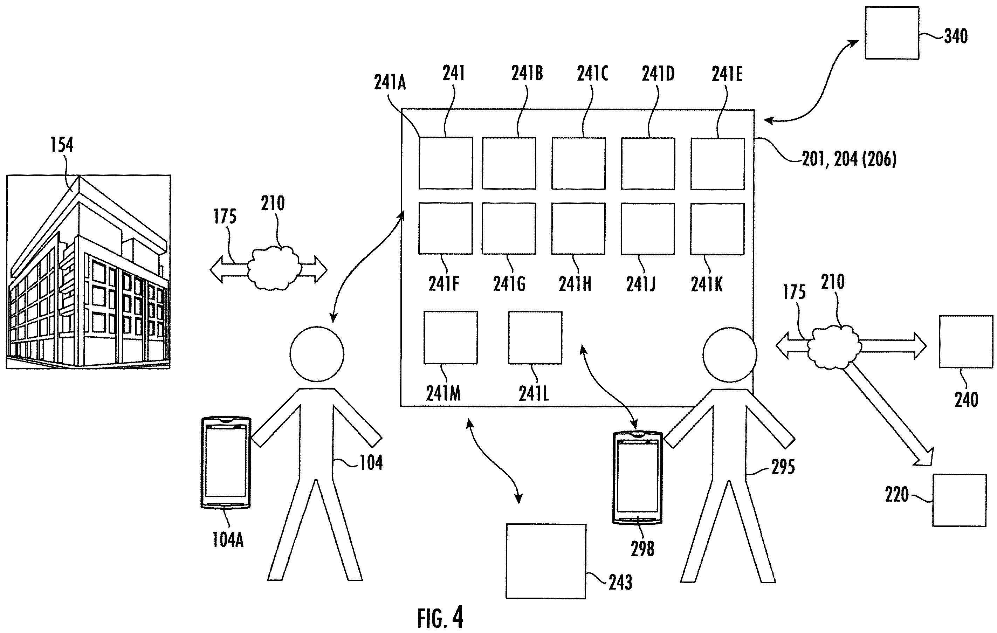

Turning to FIG. 3, a flowchart shows a method of managing the people mover system 200 according to one embodiment. The people mover 103 may be an elevator car, a moving platform or an escalator. That is, the discussion of FIG. 3 shall refer to an elevator car 103, but such reference is not intended to limit the scope of the embodiments. In FIG. 3, boxes in dashed lines in the flowchart represent further explanations, including alternative embodiments, of one or more preceding steps and are not intended to limit the scope of the embodiments. FIG. 4 shows relevant features from FIG. 2 that are applicable to the flowchart of FIG. 3.

As shown in block 1010, the method includes running, on a first operating panel 201 (e.g., generally the operating panel 206), operationally coupled to one or more system controllers 340, a plurality of user engageable apps 241, i.e., executable applications. As shown in block 1015, the method includes running, on a second operating panel 204, operationally coupled to the one or more system controllers 340, the plurality of user engageable apps 241. The apps 241 include a first app 241A configured for issuing an alert to an elevator management system, such as the BMS 140, during a trapped passenger event. The alert may be sent over the communication channel 175. The first operating panel 201 is coupled to an elevator car 103 and configured to control operations of the elevator car 103. The second operating panel 204 is a hall station panel.

The plurality of apps 241, which may have been obtained from the IoT app module 240 via the network 210 over the communications channel 175, e.g., via the App Store 242, may include an emergency call app 241B, for two-way voice and video. An infotainment content app 241C may provide news feeds. An advertising (e.g., infotainment) app 241D may provide customized advertisements to passengers 104. A mechanic control app 241E may be responsive to touchscreen input from a mechanic to control the parameters 1560. A ride quality app 241F may provide an input screen for a passenger 104 to identify ride quality issues. A digital notice board app 241G may provide relevant notices related activities within the building that houses the elevator 103, such as a hotel or office building, or otherwise. A directional app 241H may direct passengers 104 to selected locations, such as stores, restaurants or conference rooms in the building. A repairing app 241J may be engaged to trigger repairing with connected devices within the elevator 103. The listing of apps 241 is not intended on limiting the scope of the disclosure.

As shown in block 1020, the method includes continuously running the first app 241A while other ones of the user engageable apps 241 are executed, e.g., as background processes or are set to sleep when not in use. This way, a trapped passenger event may always be detected and addressed. For example, the first app 241A has a higher priority rating than the other apps 241.

As shown in block 1030, the method includes at least one of the plurality of apps 241 being configured for modification by a passenger 104 to define a passenger modified app 241K. The passenger 103 may interact directly, or via a mobile phone 104A, with the operating panels 206, to define the passenger modified app 241K.

As shown in block 1040, the method includes receiving and storing, on the system data storage module 255, the passenger modified app 241K from the operating panel 206. For example, the controller 330B of the IoT app module 240 may receive the passenger modified app 241K from the panel 206 via the communication channel 175 over the network 210, and direct storage of the same.

As shown in block 1050, the method includes distributing, by the one or more controllers 340, the passenger modified app 241K among other operating panels that are operationally coupled with the one or more system controllers 340. For example, the IoT app module 240 may update the panels 206 in one or more other elevator cars 103 in a building, geographic region, country, or globally.

As shown in block 1060, the method includes receiving and storing, on the system data storage module 255, the plurality of apps 241. For example, the mechanic 295, using their mobile device 298, or the system central controller 220 via the central control station 221, as non-limiting examples, may upload all apps 241 to the IoT app module 240.

As shown in block 1070, the method includes receiving and storing, on the system data storage module 255, an update to one or more of the plurality of apps 240 to define a system modified app 241L. For example, the mechanic 295, using their mobile device 298, or the system central controller 220 via the central control station 221, as non-limiting examples, may upload an update to one of the apps 241 to the IoT app module 240.

As shown in block 1080, the method includes pushing, by the one or more system controllers 340, the system modified app 241L among the other operating panels that are operationally coupled with the one or more system controllers 340. That is, e.g., the system central controller 220 may instruct the IoT app module 240 to transmit the system modified app 241L to panels 206 in one or more other elevator cars 103 in a building, geographic region, country, or globally.

As shown in block 1090, the method includes receiving and storing, on the system data storage module 255, digital content 241M from a third party content provider 243. The digital content 241M may be uploaded by the mechanic 295, using their mobile device 298, or the system central controller 220 via the central control station 221, as non-limiting examples. Alternatively, the third party provider 243 may have the ability to store advertising materials on the data storage module 225 for later access by the system central controller 220, which pushes the advertising materials to a selected one or more of the panels 206. The digital content includes data representing an advertisement of a product or service. The digital content 241M includes data representing an advertisement of a product or service.

As shown in block 1100, the method includes pushing, by the one or more controllers 340, to one or more of the operating panels 206, the digital content 241M, for displaying the digital content 243 on the one or more of the operating panels 206.

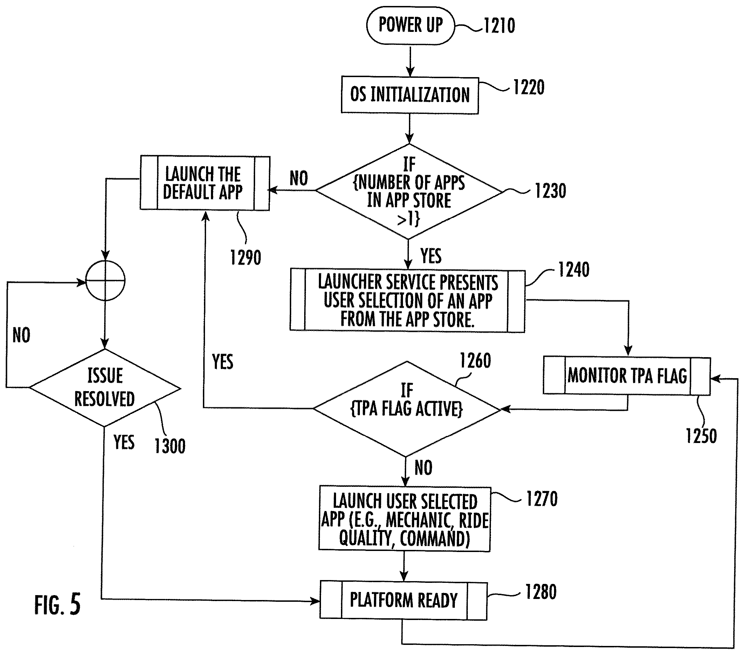

Turing to FIG. 5, additional or alternative aspects of running the apps 241 on the panels 206 is illustrated in a flowchart. As shown in block 1210, the panel 206 is powered up. As shown in block 1220 the operating system (OS) uploaded to the panel 206 is initialized. Such OS may include, e.g., Linux OS, Microsoft OS, Google Android OS or Apple IOS, as non-limiting options.

As shown in block 1230, a determination is made as to whether the number of apps 241 on the app store 242 is greater than one, e.g., by communicating with the IoT apps module 240, which has a database of the apps stored in the data storge module 225. If the answer is YES then as shown in block 1270 the method includes launching a launcher service, e.g. the IoT apps module 240 launching one or more apps, to provide for selecting additional apps from the app store 242 that may be uploaded to the panel 206.

As shown in block 1250 the method includes monitoring for a trapped passenger event flag during this time. If there is a no flag (NO at block 1260), then a user selected app (at 1240) such as mechanic app, or ride quality app, can be launched. Otherwise, if there is a yes flag (YES at block 1260), then the default trap passenger app will become active for a user to call and talk to the support authorities. If a TPA flag is registered while apps are being selected (YES at block 1250), then as shown in block 1270, the launch service may launch the mechanic control app 241E (FIG. 4), enabling the mechanic 295 to check on ride quality and issue comments. Then the platform moves to a ready mode at block 1280.

If the number of apps on the data store is not more than one (NO at block 1230) or the TPA is active (YES at block 1260), then the default app 241A on the panel 206 is executed at block 1290. The default app 241A is configured for monitoring for and addressing a trapped passenger event. The system continues to monitor for resolution of the trapped passenger event if one occurs at block 1300. For as long as the trapped passenger issue remains active (NO at 1300) the system will continue to monitor for its resolution. Once the trapped passenger issue is resolved (YES at block 1300), the platform moves to the ready mode at block 1280.

With the above embodiments, digital content offerings are provided both in-car and in-lobby smart-screen panels. The digital contents can be customized to meet the specific customer requirements, or specific deployment scenarios. The embodiments provide a design-and-develop customized applications platform, scalable to develop and manage multiple applications simultaneously. The design and develop aspect are provided on a platform that hosts more than one application simultaneously. The platform can be deployed for elevator in-car as well as in-lobby applications. The design and develop mechanisms to manage and maintain contents within the app store, based on deployment role (in-car/in-lobby) and/or customer preference, enables access control to the content, remote install of the new applications, remote update of the contents, and a touch screen for engagement by the passenger and mechanic. In one embodiment, the touch screen may be selectively disabled. For example, the mechanic app may require touch functions while infotainment (advertisement) contents, voice and video may not require touchscreen capabilities. A priority of the active contents and apps may be set, with a highest priority for a trapped passenger app.

Regarding the implementation of artificial intelligence (AI) identified herein, expressly or inherently, a machine learning model, e.g., part of an artificial intelligence (AI) system, may be utilized in the embodiments. An AI system simulates human intelligence using a digital computer or a machine controlled by a digital computer, senses the environment, e.g., using available sensors including speed, acceleration, vibration, sound, video and the like, and acquires knowledge and uses the knowledge to obtain the optimum results. The AI infrastructure includes technologies such as the sensors, dedicated artificial intelligence chips, cloud computing, distributed storage, big data processing technologies, operation/interaction systems, mechatronics, and the like. Some implementations of AI according to the embodiments utilize computer vision technology, a voice processing technology, a natural language processing technology, machine learning/deep learning and the like.

Some implementations of AI according to the embodiments utilize pre-trained (PT) machine translation models that adopt a sequence-to-sequence (sequence-sequence or S-S) framework based on a neural network. The S-S framework is a framework including an encoder-decoder structure. The encode-decoder structure converts an input sequence into another sequence output. In this framework, the encoder converts the input sequence into vectors, and the decoder accepts the vectors and generates the output sequence in time order. The encoder and the decoder may utilize the same type of neural network (NN) model, or may utilize different types of neural network models. The neural network model may be a CNN (Convolutional Neural network) model, an RNN (redundant Neural network) model, a long-short-term memory (LSTM) model, a delay network model, a gated CNN model, or the like.

The trained machine learning models, once trained, can analyze the input data, and in one or more aspects, predict and/or characterize features included in the sensed data. In the case of video, in one non-limiting example, the sensed data can include sequential images and/or encoded video data (e.g., using digital video file/stream formats and/or codecs, such as MP4, MOV, AVI, WEBM, AVCHD, OGG, and/or the like including combinations and/or multiples thereof). The prediction and/or characterization of the features can include segmenting the video data. In some instances, the one or more trained machine learning models include or are associated with a preprocessing or augmentation (e.g., intensity normalization, resizing, cropping, and/or the like including combinations and/or multiples thereof) that is performed prior to segmenting the video data. An output of the one or more trained machine learning models can include a prediction of aspects of the video data, a location and/or position of the aspects within the video data, and/or state of the aspects. The location can be a set of coordinates in an image/frame in the video data. The trained machine learning models, in one or more examples, are trained to perform higher-level predictions and tracking.

Similar predictions can be made with regard to the operational state of a device by analyzing sensor data captured while the device is utilized and applying the data to trained machine learning models. For example, utilizing a serviced learning technique, the model is trained on known inputs and outputs from legacy events to predict future outputs from future inputs. The models may be evaluated so that variables may be weighted or re-weighted to more accurately correlate inputs and outputs, and the model may be re-retrained as more inputs and outputs are collected. For example, the prediction of a state of multiple devices of an operationally integrated system of devices may be obtained utilizing a trained model. Data may be captured, including operational sounds, vibrations, etc., for one (or fewer than all) of the devices, and the captured data may be run through a trained model that is trained to identify the influence (constructive and destructive) that the devices have on each other in their respective operational states, including when they are functioning within and outside of acceptable tolerances.

Regarding telecommunication implementations identified herein, expressly or inherently, wireless connections identified above may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Other applicable protocols include Low Power WAN (LPWAN), which is a wireless wide area network (WAN) designed to allow long-range communications at a low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radio-frequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and Category M1 internet of things (Cat M1-IOT). Wireless communications for the disclosed systems may include cellular, e.g. 2G/3G/4G (etc.). The above is not intended on limiting the scope of applicable wireless technologies.

Wired connections identified above may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a sever/client protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allows microcontrollers and devices to communicate with each other in applications without a host computer. CAN is a message-based protocol released by the International Organization for Standards (ISO). The above is not intended on limiting the scope of applicable wired technologies.

As indicated, when data is transmitted over a network between end processors, the data may be transmitted in raw form or may be processed in whole or part at any one of the end processors or an intermediate processor, e.g., at a cloud service or other processor. The data may be parsed at any one of the processors, partially or completely processed or compiled, and may then be stitched together or maintained as separate packets of information.

Regarding computing technologies identified herein, expressly or inherently, each processor identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. An elevator system, comprising:
an elevator management system, the elevator management system including one or more system controllers;
an elevator car, the elevator car having a first operating panel;
wherein the first operating panel is operationally coupled to the one or more system controllers; and
wherein the first operating panel includes a plurality of user engageable apps, including a first app that is configured for issuing an alert to the elevator management system during a trapped passenger event.

2. The system of claim 1, including:
a hall station, the hall station having a second operating panel,
wherein the second operating panels further includes the plurality of user engageable apps.

3. The system of claim 1 or 2, wherein:
the first app is configured to continuously run while other ones of the user engageable apps are executed.

4. The system of any of claims 1 to 3, wherein the plurality of apps includes one or more of:
an emergency call app, for two-way voice and video;
an infotainment content app, including news feeds;
an advertising app;
a mechanic control app, responsive to touchscreen input;
a ride quality app;
a digital notice board app;
a directional app, directing users to selected locations; or
a repairing app, to trigger repairing with connected devices.

5. The system of any of claim 1 to 4, wherein:
at least one of the plurality of apps is configured for being modified by a passenger interacting directly, or via a mobile device, with one or more of the first and second operating panels, to define a passenger modified app.

6. The system of any of claims 1 to 5, wherein:
a system data storage module is configured to receive and store the passenger modified app from the one or more of the first and second operating panels, and
the one or more controllers is configured to distribute the passenger modified app among other operating panels that are operationally coupled with the one or more system controllers.

7. The system of claim 6, wherein
the system data storage module is configured to:
receive and store the plurality of apps; and
receive an update to one or more of the plurality of apps to define a system modified app; and
the one or more system controllers is configured push the system modified app among the other operating panels that are operationally coupled with the one or more system controllers.

8. The system of claim 6 or 7, wherein
the system data storage module is configured to receive digital content from a third party content provider; and
the one or more system controllers is configured to push the digital content to the one more of the first and second operating panels for displaying the digital content.

9. The system of claim 8, wherein the digital content includes data representing an advertisement of a product or service; and/or
wherein the one or more of the first and second operating panels is the first operating panel in the elevator car; and/or
wherein the one or more of the first and second operating panels is the second operating panel in the hall station.

10. A method of operating an elevator system, comprising:
running, on a first operating panel, operationally coupled to one or more system controllers, a plurality of user engageable apps, including a first app that is configured for issuing an alert during a trapped passenger event,
wherein: the first operating panel is coupled to an elevator car and configured to control operations of the elevator car .

11. The method of claim 10, comprising:
running, on a second operating panel, operationally coupled to the one or more system controllers, the plurality of user engageable apps, including the first app that is configured for issuing an alert during a trapped passenger event; and the second operating panel is a hall station panel; and/or
the method comprising:
continuously running the first app while other ones of the user engageable apps are executed.

12. The method of claim 10 or 11, wherein the plurality of apps includes one or more of:
an emergency call app, for two-way voice and video;
an infotainment content app, including news feeds;
an advertising app;
a mechanic control app, responsive to touchscreen input;
a ride quality app;
a digital notice board app;
a directional app, directing users to selected locations; or
a repairing app, to trigger repairing with connected devices.

13. The method of any of claims 10 to 12, comprising:
at least one of the plurality of apps being configured for modification by a passenger interacting directly, or via a mobile phone, with one or more of the first and second operating panels, to define a passenger modified app; and/or
the method comprising:
receiving and storing, on a system data storage module, the passenger modified app from the one or more of the first and second operating panels; and
distributing, by the one or more controllers, the passenger modified app among other operating panels that are operationally coupled with the one or more system controllers.

14. The method of any of claims 10 to 13, comprising:
receiving and storing, on the system data storage module, the plurality of apps;
receiving, on the system data storage module, an update to one or more of the plurality of apps to define a system modified app; and
pushing, by the one or more system controllers, the system modified app among the other operating panels that are operationally coupled with the one or more system controllers.

15. The method of any of claims 10 to 14, comprising:
receiving and storing, on the system data storage module, digital content from a third party content provider; and
pushing to one or more of the operating panels, by the one or more system controllers, the digital content, for displaying the digital content; and/or
wherein the digital content includes data representing an advertisement of a product or service.
